# EUROPÄISCHE PATENTSCHRIFT

(11) **EP 1 851 941 B1**
(45) Veröffentlichungstag und Bekanntmachung des Hinweises auf die Patenterteilung: **27.08.2014**
(21) Anmeldenummer: 06706916.1
(22) Anmeldetag: 14.02.2006
(51) Int. Cl.: H04M 1/725, G06F 9/44

(54) **WARTUNG VON DATEN**
DATA MAINTENANCE
MAINTENANCE DE DONNEES

(30) Priorität: 14.02.2005 DE 102005006789
(43) Veröffentlichungstag der Anmeldung: 07.11.2007
(73) Patentinhaber: Vodafone Holding GmbH, 40213 Düsseldorf (DE)
(72) Erfinder: LISS, Peter, 11523 Stockholm (SE); BURHOLT, Adrian, 40882 Rattingen (DE); DE VOS, Geert, B-1730 Asse (BE); TOLLEMACHE, Luke, Oxford, OX41YB (GB); PULLIN, Graham, ECIR 5DF, London (GB); WEISS, Scott, New York, 10014 (US)
(74) Vertreter: Weisbrodt, Bernd
(86) Internationale Anmeldenummer: PCT/EP2006/001309
(87) Internationale Veröffentlichungsnummer: WO 2006/084764

(56) Entgegenhaltungen:
- WO-A-00/26803
- WO-A-02/03186
- US-A1- 2001 021 659
- US-A1- 2003 083 099
- US-A1- 2003 104 833
- US-A1- 2004 004 603
- US-A1- 2004 116 155
- US-A1- 2004 157 638

## Beschreibung

Die vorliegende Erfindung betrifft ein System, eine Vorrichtung, ein mobiles Endgerät und ein Verfahren zur Wartung von seitens in Mobilfunknetzen betreibbaren mobilen Endgeräten gespeicherten nutzerindividuellen Daten.

In Mobilfunknetzen betreibbare mobile Endgeräte sind im Stand der Technik in zahlreichen Ausgestaltungen und Ausführungsformen bekannt. In der Regel weisen diese Endgeräte eine Anzeigeeinrichtung zur optischen Wiedergabe von Informationen in Form eines Displays, wenigstens einer Eingabeeinrichtung zur Erfassung von Informationen in Form einer Tastatur oder eines Mikrofons, wenigstens einer Speichereinrichtung zur Speicherung nutzerindividueller Daten, insbesondere Informationen über Kommunikationspartner des Nutzers des mobilen Endgerätes, beispielsweise Namen, Rufnummern, Terminen oder dergleichen nutzerindividuelle Daten, und eine zumindest die Anzeigeeinrichtung, die Eingabeeinrichtung und die Speichereinrichtung steuernde Steuereinrichtung auf.

Eine Wartung von Daten im Sinne der vorliegenden Erfindung umfasst insbesondere eine Sicherung, eine Pflege und/oder eine Aktualisierung von Datenbeständen, vorliegend nutzerindividuellen Daten wie beispielsweise Namen, Rufnummern und dergleichen Daten von Kommunikationspartnern und/oder Terminen des Nutzers eines in wenigstens einem Mobilfunknetz betreibbaren mobilen Endgerätes. Die Wartung von seitens in Mobilfunknetzen betreibbaren mobilen Endgeräten gespeicherten nutzerindividuellen Daten seitens der mobilen Endgeräte selbst ist aufgrund der in der Regel hinsichtlich der Tastenanzahl und/oder -größe eingeschränkten bzw. beschränkten Eingabeeinrichtungen mobiler Endgeräte umständlich und schwierig, insbesondere für ältere, gehandikapte und/oder ungeübte Nutzer. Eine Sicherung von seitens eines mobilen Endgerätes gespeicherten nutzerindividuellen Daten außerhalb des mobilen Endgerätes ist in der Regel nicht oder nur unter Verwendung von austauschbaren Speichereinrichtungen, beispielsweise einer sogenannten "mini SD Card", und dementsprechend aufwendig und beschränkt möglich.

Im Stand der Technik sind universell programmierbare, mit einem mobilen Endgerät datenaustauschend verbindbare Recheneinrichtungen wie Personal Computer (PCs) bekannt, auf denen eine Wartung von Daten ermöglichende Programme ausführbar sind. Derartige Recheneinrichtungen weisen neben einer eine Datenaustauschverbindung mit einem mobilen Endgerät bereitstellenden Schnittstelle, einer mit der Schnittstelle verbundene Speichereinrichtung zur Speicherung von Daten, einer Eingabeeinrichtung zur Erfassung und/oder Verarbeitung von Daten, in der Regel eine mehrere Tasten aufweisende Tastatur, und einer Anzeigeeinrichtung zur optischen Wiedergabe von Informationen eine Steuereinrichtung, in der Regel eine sogenannte Central Processing Unit (CPU), auf, die zur Steuerung bzw. zumindest zur vermittelnden Steuerung der Speichereinrichtung, der Eingabeeinrichtung und der Anzeigeeinrichtung genutzt wird.

Eine solche Recheneinrichtung ist beispielsweise aus der WO 00/26803 A1 bekannt. Über eine Schnittstelle kann diese Recheneinrichtung beispielsweise mit einem Mobilfunktelefon verbunden werden, wobei über die Schnittstelle Daten zwischen der Recheneinrichtung und dem Mobilfunktelefon ausgetauscht werden können. Gemäß der WO 00/26803 A1 sollen seitens des Mobilfunktelefons bereitgestellte Anwendungsprogramme die Anzeigeeinrichtung der Recheneinrichtung nutzen können und von den Eingabegeräten der Recheneinrichtung, wie der Tastatur und der Maus, Befehle empfangen können, wodurch eine komfortable Bedienung des Mobilfunktelefons ermöglicht werden soll.

Derartige Recheneinrichtungen und von diesen genutzte bzw. auf diesen ausführbare Programme sind zum einen relativ kostenintensiv, insbesondere durch die aufgrund der universellen und umfassenden Programmier- und/oder Nutzbarkeit leistungsstarken und komplexen Steuereinrichtung (CPU) sowie entsprechender Betriebssysteme und Programme für diese, als auch hinsichtlich der Bedienung und/oder Handhabung aufwändig, umständlich und schwierig, insbesondere für ältere, gehandikapte und/oder ungeübte Nutzer.

Vor diesem Hintergrund liegt der vorliegenden Erfindung die **Aufgabe** zugrunde, die Wartung von seitens in Mobilfunknetzen betreibbaren mobilen Endgeräten gespeicherten nutzerindividuellen Daten derart zu verbessern, dass unter Meidung der beschriebenen Nachteile insbesondere für ältere und/oder ungeübte Nutzer eine einfachere und weniger umständliche Bedien- bzw. Handhabbarkeit ermöglicht wird.

Zur technischen **Lösung** dieser Aufgabe wird mit der vorliegenden Erfindung ein System zur Wartung von seitens in Mobilfunknetzen betreibbaren mobilen Endgeräten gespeicherten nutzerindividuellen Daten gemäß Anspruch 1 vorgeschlagen.

Der Erfindung liegt die Erkenntnis zugrunde, dass die Wartung von seitens in Mobilfunknetzen betreibbaren mobilen Endgeräten gespeicherten nutzerindividuellen Daten einfacher und kostengünstiger erfolgen kann, wenn seitens einer entsprechenden extern zum mobilen Endgerät vorgesehenen Wartungsvorrichtung für eine Steuerung von Komponenten der Wartungsvorrichtung die die entsprechenden bzw. korrespondierenden Komponenten des mobilen Endgerätes steuernde Steuereinrichtung genutzt wird. Vorteilhafterweise erfolgen dabei die Wiedergabe seitens der Anzeigeeinrichtung der Wartungsvorrichtung und/oder die Bedien- und/oder Handhabbarkeit über die Eingabeeinrichtung der Wartungsvorrichtung entsprechend der Anzeigeeinrichtung des mobilen Endgerätes und/oder entsprechend der Eingabeeinrichtung des mobilen Endgerätes, so dass der jeweilige Nutzer eines mobilen Endgerätes die Wartungsvorrichtung entsprechend der Bedien- und/oder Handhabung des mobilen Endgerätes bedienen bzw. handhaben kann. Aufwändige Bedien- und/oder Handhabungsschulungen für eine Bedien- und/oder Handhabung der Wartungsvorrichtung können so entfallen, so dass insbesondere älteren und/oder ungeübten Nutzer eine einfachere und weniger umständliche Bedien- bzw. Handhabbarkeit ermöglicht wird.

Die erfindungsgemäße Wartungsvorrichtung weist eine mit der Schnittstelle verbundene Anzeigeeinrichtung zur optischen Wiedergabe von nutzerindividuellen Daten wenigstens eines mobilen Endgerätes und/oder Eingabemöglichkeiten zur Eingabe und/oder Verarbeitung von nutzerindividuellen Daten wenigstens eines mobilen Endgerätes, auf. Dadurch wird die Lesbarkeit von ansonsten und/oder ergänzend seitens der Anzeigeeinrichtung des mobilen Endgerätes wiedergegebenen Informationen verbessert, insbesondere, wenn die Anzeigeeinrichtung der Wartungsvorrichtung als Display mit einem größeren Anzeigebereich bzw. Anzeige als die in der Regel recht klein gehaltene Anzeigeeinrichtung des mobilen Endgerätes ausgebildet ist.

In einer beispielhaften Ausgestaltung sind die Schnittstelle, die Speichereinrichtung die Eingabeeinrichtung und/oder die Anzeigeeinrichtung der Wartungsvorrichtung mit der Steuereinrichtung des mobilen Endgerätes steuerbar.

In einer weiteren beispielhaften Ausgestaltung der Erfindung erfolgt die Steuerung der Wartungsvorrichtung über die eine Datenaustauschverbindung zwischen der Wartungsvorrichtung und einem mobilen Endgerät bereitstellende Schnittstelle der Wartungsvorrichtung. Dazu ist seitens des mobilen Endgerätes ein entsprechender mit der Schnittstelle der Wartungsvorrichtung verbindbarer Anschluss, beispielsweise eine entsprechende Schnittstelle, vorhanden. Über die Datenaustauschverbindung sind so entsprechende Eingabedaten und/oder Anzeigedaten zwischen dem mobilen Endgerät und der Wartungsvorrichtung austauschbar. Die Daten werden dabei seitens der Steuereinrichtung des mobilen Endgerätes derart aufbereitet und/oder verarbeitet bzw. umgesetzt, dass diese seitens der Wartungsvorrichtung direkt nutzbar sind, beispielsweise zur Steuerung der Wiedergabe von Informationen seitens der Anzeigevorrichtung der Wartungsvorrichtung.

Gemäß einem vorteilhaften Vorschlag der Erfindung sind im Rahmen der Steuerung der Wartungsvorrichtung seitens der Eingabeeinrichtung der Wartungsvorrichtung zur Erfassung und/oder Verarbeitung von Daten durch Tastenbetätigung erfolgende Eingaben über die eine Datenaustauschverbindung zwischen der Wartungsvorrichtung und einem mobilen Endgerät bereitstellende Schnittstelle der Wartungsvorrichtung der Steuereinrichtung des mobilen Endgerätes zuführbar und seitens der Steuereinrichtung des mobilen Endgerätes entsprechend erfassbar und/oder verarbeitbar. Vorteilhafterweise sind seitens der Steuereinrichtung des mobilen Endgerätes erfasste und/oder verarbeitete Daten seitens der Anzeigeeinrichtung des mobilen Endgerätes wiedergebbar.

In einer weiteren vorteilhaften Ausgestaltung der Erfindung sind im Rahmen der Steuerung der Wartungsvorrichtung seitens der Anzeigeeinrichtung der Wartungsvorrichtung wiederzugebende Informationen der Anzeigeeinrichtung der Wartungsvorrichtung von der Steuereinrichtung des mobilen Endgerätes über die eine Datenaustauschverbindung zwischen der Wartungsvorrichtung und einem mobilen Endgerät bereitstellende Schnittstelle der Wartungsvorrichtung zuführbar und entsprechend seitens der Anzeigeeinrichtung der Wartungsvorrichtung wiedergebbar.

Die optische Wiedergabe von Eingabemöglichkeiten zur Eingabe und/oder Verarbeitung von nutzerindividuellen Daten seitens der Anzeigeeinrichtung erfolgt korrespondierend mit der jeweiligen eine entsprechende Eingabe und/oder Verarbeitung von nutzerindividuellen Daten durch Betätigung ermöglichenden Taste der Eingabeeinrichtung. Zudem korrespondiert die optische Wiedergabe von Eingabemöglichkeiten zur Eingabe und/oder Verarbeitung von nutzerindividuellen Daten seitens der Anzeigeeinrichtung mit der jeweiligen eine entsprechende Eingabe und/oder Verarbeitung von nutzerindividuellen Daten durch Betätigung ermöglichenden Taste der Eingabeeinrichtung hinsichtlich der Farbe, der Form und/oder der Position der Taste seitens der Eingabeeinrichtung. In einer beispielhaften Ausgestaltung der Erfindung ist die Farbe zumindest einer der Tasten der

Eingabeeinrichtung der Wartungsvorrichtung und/oder des mobilen Endgerätes veränderbar. Die Veränderbarkeit der Farbe der Taste der Eingabeeinrichtung wird dem Nutzer dabei beispielsweise sowohl die zur Verfügung stehende Bedienmöglichkeit als auch die für diese zu betätigende Taste der Eingabeeinrichtung signalisiert Durch diese erfindungsgemäßen Maßnahmen - einzeln und/oder in Kombination derselben - ist die Bedien- bzw. Handhabbarkeit sowohl seitens der Wartungsvorrichtung als auch seitens des mobilen Endgerätes und damit eine erfindungsgemäße Wartung von nutzerindividuellen Daten insgesamt weiter vereinfachbar.

Eine beispielhafte Ausgestaltung der Erfindung ist gekennzeichnet durch eine Speicherung von nutzerindividuellen Daten seitens der Speichereinrichtung der Wartungsvorrichtung und/oder des mobilen Endgerätes als Verarbeitung von nutzerindividuellen Daten. Eine weitere beispielhafte Ausgestaltung der Erfindung ist gekennzeichnet durch einen Datenaustausch zwischen einem mobilen Endgerät und der Speichereinrichtung der Wartungsvorrichtung und/oder des mobilen Endgerätes als Verarbeitung von nutzerindividuellen Daten. Eine weitere vorteilhafte Ausgestaltung der Erfindung ist gekennzeichnet durch eine Synchronisierung von nutzerindividuellen Daten zwischen einem mobilen Endgerät und der Speichereinrichtung der Wartungsvorrichtung und/oder des mobilen Endgerätes als Verarbeitung von nutzerindividuellen Daten. Ein weiterer vorteilhafter Vorschlag der Erfindung ist gekennzeichnet durch eine automatische Synchronisierung mit oder durch Aufbau einer Datenaustauschverbindung zwischen einem mobilen Endgerät und der Wartungsvorrichtung.

Eine besonders vorteilhafte Ausgestaltung der Erfindung ist gekennzeichnet durch eine Konvertierung von nutzerindividuellen Daten von einem seitens des mobilen Endgerätes genutzten Datenformat in ein seitens der Wartungsvorrichtung genutztes Datenformat und/oder von einem seitens der Wartungsvorrichtung genutzten Datenformat in ein seitens des mobilen Endgerätes genutztes Datenformat als Verarbeitung von nutzerindividuellen Daten. Dadurch sind vorteilhafterweise Datenbestände unterschiedliche Datenformate zwischen verschiedenen mobilen Endgeräten und der Wartungsvorrichtung zu Wartungszwecken austauschbar.

Eine weitere beispielhafte Ausgestaltung der Erfindung ist gekennzeichnet durch Termine und/oder Informationen über Kommunikationspartner des Nutzers des mobilen Endgerätes als nutzerindividuelle Daten. Eine beispielhafte Ausgestaltung der Erfindung ist gekennzeichnet durch wenigstens einen Teil der Daten des Mobilfunkteilnehmeridentifikationsmoduls (Subscriber Identity Module (SIM)) des mobilen Endgerätes als nutzerindividuelle Daten.

In einer besonders vorteilhaften Ausgestaltung der Erfindung sind nutzerindividuelle Daten seitens der Speichereinrichtung in komprimierter und/oder kodierter Form speicherbar sind, wobei die Komprimierung und/oder Kodierung vorzugsweise seitens der Steuereinrichtung des mobilen Endgerätes erfolgt oder zumindest von dieser steuerbar ist.

Gemäß einer weiteren beispielhaften Ausgestaltung der Erfindung ist die Schnittstelle der Wartungsvorrichtung eine Funk-, Infrarot- und/oder Kabelverbindung für den Datenaustausch nutzend ausgebildet. Dementsprechend weist das mobile Endgerät eine einen Anschluss an die Schnittstelle der Wartungsvorrichtung ermöglichende Schnittstelle auf. Beispielsweise erfolgt die Datenaustauchverbindung über eine Bluetooth-, IrDa- oder USB-Verbindung. In einer weiteren beispielhaften Ausgestaltung der Erfindung ist die eine Kabelverbindung für den Datenaustausch nutzend ausgebildete Schnittstelle der Wartungsvorrichtung zum Laden eines Akkumulators des mobilen Endgerätes nutzbar.

Zur technischen **Lösung** der eingangs genannten Aufgabe wird mit der vorliegenden Erfindung des weiteren eine Vorrichtung zur Wartung von seitens in Mobilfunknetzen betreibbaren mobilen Endgeräten gespeicherten nutzerindividuellen Daten gemäß Anspruch 9 vorgeschlagen.

Die erfindungsgemäße Vorrichtung weist eine mit der Schnittstelle verbundene Anzeigeeinrichtung zur optischen Wiedergabe von nutzerindividuellen Daten wenigstens eines mobilen Endgerätes und/oder Eingabemöglichkeiten zur Eingabe und/oder Verarbeitung von nutzerindividuellen Daten wenigstens eines mobilen Endgerätes, auf, welche mit der Steuereinrichtung des mobilen Endgerätes steuerbar ist.

Zur Versorgung der einzelnen Komponenten der Vorrichtung mit Energie, weist die Vorrichtung ferner eine mit einem Energieversorgungsnetzwerk verbindbare Energieversorgungseinrichtung, beispielsweise ein Netzteil oder dergleichen, auf.

Beispielsweise erfolgt die Steuerung über die eine Datenaustauschverbindung bereitstellende Schnittstelle.

Im Rahmen der Steuerung sind seitens der Eingabeeinrichtung durch Tastenbetätigung erfolgende Eingaben über die eine Datenaustauschverbindung bereitstellende Schnittstelle der Steuereinrichtung des mobilen Endgerätes zuführbar.

In einer weiteren Ausgestaltung der Erfindung sind im Rahmen der Steuerung seitens der Anzeigeeinrichtung wiederzugebende Informationen der Anzeigeeinrichtung von der Steuereinrichtung des mobilen Endgerätes über die eine Datenaustauschverbindung bereitstellende Schnittstelle zuführbar und entsprechend seitens der Anzeigeeinrichtung wiedergebbar.

Die optische Wiedergabe von Eingabemöglichkeiten zur Eingabe und/oder Verarbeitung von nutzerindividuellen Daten seitens der Anzeigeeinrichtung erfolgt korrespondierend mit der jeweiligen eine entsprechende Eingabe und/oder Verarbeitung von nutzerindividuellen Daten durch Betätigung ermöglichenden Taste der Eingabeeinrichtung. Ferner korrespondiert die optische Wiedergabe von Eingabemöglichkeiten zur Eingabe und/oder Verarbeitung von nutzerindividuellen Daten seitens der Anzeigeeinrichtung dabei mit der jeweiligen eine entsprechende Eingabe und/oder Verarbeitung von nutzerindividuellen Daten durch Betätigung ermöglichenden Taste der Eingabeeinrichtung hinsichtlich der Farbe, der Form und/oder der Position der Taste seitens der Eingabeeinrichtung. Beispielsweise ist die Farbe zumindest einer der Tasten der Eingabeeinrichtung veränderbar.

Weitere beispielhafte Ausgestaltungen der Erfindung sind gekennzeichnet durch eine Speicherung von nutzerindividuellen Daten seitens der Speichereinrichtung, einen Datenaustausch zwischen einem mobilen Endgerät und der Speichereinrichtung und/oder durch eine Synchronisierung von nutzerindividuellen Daten zwischen einem mobilen Endgerät und der Speichereinrichtung als Verarbeitung von nutzerindividuellen Daten. Vorteilhafterweise erfolgt eine automatische Synchronisierung mit oder durch den Aufbau einer Datenaustauschverbindung zu einem mobilen Endgerät. Eine weitere Ausgestaltung der Erfindung ist gekennzeichnet durch eine Konvertierung von nutzerindividuellen Daten von einem seitens eines mobilen Endgerätes genutzten Datenformat in ein seitens der erfindungsgemäßen Vorrichtung genutztes Datenformat und/oder von einem seitens der erfindungsgemäßen Vorrichtung genutzten Datenformat in ein seitens des mobilen Endgerätes genutztes Datenformat als Verarbeitung von nutzerindividuellen Daten.

Weitere beispielhafte Ausgestaltungen der Erfindung sind gekennzeichnet durch Termine und/oder Informationen über Kommunikationspartner des Nutzers des mobilen Endgerätes und/oder durch wenigstens einen Teil der Daten des Mobilfunkteilnehmeridentifikationsmoduls (Subscriber Identity Module (SIM)) des mobilen Endgerätes als nutzerindividuelle Daten.

In einer besonders vorteilhaften Ausgestaltung der Erfindung sind nutzerindividuelle Daten seitens der Speichereinrichtung in komprimierter und/oder kodierter Form speicherbar, wobei die Komprimierung und/oder Kodierung vorzugsweise seitens der Steuereinrichtung des mobilen Endgerätes erfolgt oder zumindest von dieser steuerbar ist.

Beispielsweise ist die Schnittstelle für den Datenaustausch der erfindungsgemäßen Vorrichtung eine Funk-, Infrarot- und/oder Kabelverbindung nutzend ausgebildet. In einer weiteren beispielhaften Ausgestaltung der Vorrichtung ist die eine Kabelverbindung für den Datenaustausch nutzend ausgebildete Schnittstelle zum Laden eines Akkumulators eines mobilen Endgerätes nutzbar.

Die erfindungsgemäße Vorrichtung ist vorteilhafterweise eine Wartungsvorrichtung eines erfindungsgemäßen Systems zur Wartung von seitens in Mobilfunknetzen betreibbaren mobilen Endgeräten gespeicherten nutzerindividuellen Daten.

Zur technischen **Lösung** der eingangs genannten Aufgabe wird mit der vorliegenden Erfindung ferner ein mobiles Endgerät zur Nutzung in Mobilfunknetzen, zur Wartung von seitens in Mobilfunknetzen betreibbaren mobilen Endgeräten gespeicherten nutzerindividuellen Daten gemäß Anspruch 17 vorgeschlagen.

Mit der Steuereinrichtung des mobilen Endgerätes ist ferner eine Anzeigeeinrichtung zur optischen Wiedergabe von Informationen der Wartungsvorrichtung steuerbar, wobei die Anzeigevorrichtung der Wartungsvorrichtung mit der Schnittstelle verbunden ist und die Anzeigevorrichtung vorzugsweise zur optischen Wiedergabe von nutzerindividuellen Daten wenigstens eines mobilen Endgerätes und/oder Eingabemöglichkeiten zur Eingabe und/oder Verarbeitung von nutzerindividuellen Daten wenigstens eines mobilen Endgerätes ausgebildet ist.

Beispielsweise erfolgt die erfindungsgemäße Steuerung der Wartungsvorrichtung über die eine Datenaustauschverbindung bereitstellende Schnittstelle der Wartungsvorrichtung mittels der Steuereinrichtung des erfindungsgemäßen mobilen Endgerätes.

Im Rahmen der Steuerung sind der Steuereinrichtung des erfindungsgemäßen mobilen Endgerätes seitens der Eingabeeinrichtung der Wartungsvorrichtung durch Tastenbetätigung erfolgende Eingaben vorteilhafterweise über die eine Datenaustauschverbindung bereitstellende Schnittstelle der Wartungsvorrichtung zuführbar und seitens der Steuereinrichtung des mobilen Endgerätes entsprechend erfassbar und/oder verarbeitbar. Vorteilhafterweise sind von der Steuereinrichtung erfasste und/oder verarbeitete Daten seitens der Anzeigeeinrichtung des mobilen Endgerätes wiedergebbar.

Vorteilhafterweise sind im Rahmen der Steuerung sind seitens der Anzeigeeinrichtung der Wartungsvorrichtung wiederzugebende Informationen der Anzeigeeinrichtung der Wartungsvorrichtung von der Steuereinrichtung des erfindungsgemäßen mobilen Endgerätes über die eine Datenaustauschverbindung bereitstellende Schnittstelle der Wartungsvorrichtung zuführbar und entsprechend seitens der Anzeigeeinrichtung der Wartungsvorrichtung wiedergebbar.

Die optische Wiedergabe von Eingabemöglichkeiten zur Eingabe und/oder Verarbeitung von nutzerindividuellen Daten seitens der Anzeigeeinrichtung erfolgt korrespondierend mit der jeweiligen eine entsprechende Eingabe und/oder Verarbeitung von nutzerindividuellen Daten durch Betätigung ermöglichenden Taste der Eingabeeinrichtung. Zudem korrespondiert die optische Wiedergabe von Eingabemöglichkeiten zur Eingabe und/oder Verarbeitung von nutzerindividuellen Daten seitens der Anzeigeeinrichtung mit der jeweiligen eine entsprechende Eingabe und/oder Verarbeitung von nutzerindividuellen Daten durch Betätigung ermöglichenden Taste der Eingabeeinrichtung hinsichtlich der Farbe, der Form und/oder der Position der Taste seitens der Eingabeeinrichtung. Beispielsweise ist die Farbe zumindest einer der Tasten der Eingabeeinrichtung des erfindungsgemäßen mobilen Endgerätes veränderbar.

Weitere endgeräteseitige beispielhafte Ausgestaltungen der Erfindung sind gekennzeichnet durch eine Speicherung von nutzerindividuellen Daten seitens der Speichereinrichtung, einen Datenaustausch zwischen einem mobilen Endgerät und der Speichereinrichtung des mobilen Endgerätes und/oder der Wartungsvorrichtung. Eine vorteilhafte endgeräteseitige Ausgestaltung der Erfindung ist gekennzeichnet durch eine Synchronisierung von nutzerindividuellen Daten zwischen einem mobilen Endgerät und der Speichereinrichtung der Wartungsvorrichtung als Verarbeitung von nutzerindividuellen Daten. Vorteilhafterweise erfolgt eine automatische Synchronisierung mit oder durch den Aufbau einer Datenaustauschverbindung zu einer Wartungsvorrichtung. Eine weitere Ausgestaltung der Erfindung ist gekennzeichnet durch eine Konvertierung von nutzerindividuellen Daten von einem seitens eines mobilen Endgerätes genutzten Datenformat in ein seitens der Wartungsvorrichtung genutztes Datenformat und/oder von einem seitens der Wartungsvorrichtung genutzten Datenformat in ein seitens des mobilen Endgerätes genutztes Datenformat als Verarbeitung von nutzerindividuellen Daten.

Weitere beispielhafte Ausgestaltungen der Erfindung sind gekennzeichnet durch Termine und/oder Informationen über Kommunikationspartner des Nutzers des mobilen Endgerätes und/oder durch wenigstens einen Teil der Daten des Mobilfunkteilnehmeridentifikationsmoduls (Subscriber Identity Module (SIM)) des mobilen Endgerätes als nutzerindividuelle Daten.

In einer besonders vorteilhaften Ausgestaltung der Erfindung sind nutzerindividuelle Daten seitens der Speichereinrichtung in komprimierter und/oder kodierter Form speicherbar, wobei die Komprimierung und/oder Kodierung vorzugsweise seitens der Steuereinrichtung des mobilen Endgerätes erfolgt oder zumindest von dieser steuerbar ist.

Beispielsweise ist die Schnittstelle für den Datenaustausch zwischen der Wartungsvorrichtung und dem erfindungsgemäßen mobilen Endgerät eine Funk-, Infrarot- und/oder Kabelverbindung nutzend ausgebildet. In einer weiteren beispielhaften Ausgestaltung des erfindungsgemäßen mobilen Endgerätes ist ein Akkumulators des mobilen Endgerätes über die eine Kabelverbindung für den Datenaustausch nutzend ausgebildete Schnittstelle der Wartungsvorrichtung ladbar.

Das erfindungsgemäße mobile Endgerät ist vorteilhafterweise ein mobiles Endgerät eines erfindungsgemäßen Systems zur Wartung von seitens in Mobilfunknetzen betreibbaren mobilen Endgeräten gespeicherten nutzerindividuellen Daten.

Schließlich wird mit der vorliegenden Erfindung zur technischen Lösung der eingangs genannten Aufgabe ein Verfahren zur Wartung von seitens in Mobilfunknetzen betreibbaren mobilen Endgeräten gespeicherten nutzerindividuellen Daten vorgeschlagen, bei welchem ein erfindungsgemäßes System eine erfindungsgemäße Wartungsvorrichtung und/oder ein erfindungsgemäßes mobiles Endgerät verwendet wird.

Weitere Einzelheiten, Merkmale und Vorteile der Erfindung werden nachfolgend anhand des in der Figur der Zeichnung dargestellten Ausführungsbeispiels näher erläutert. Dabei zeigt:

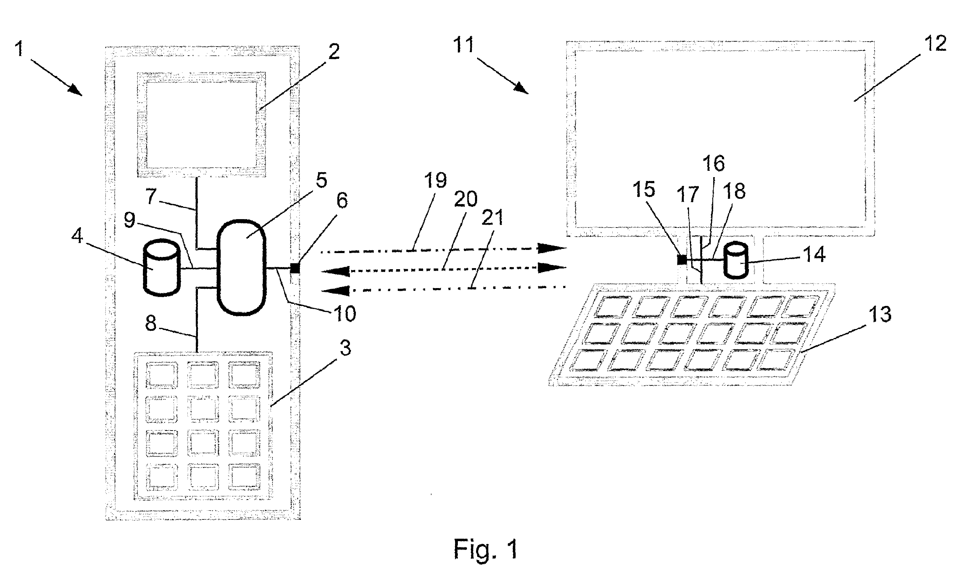

- Fig. 1: in einer schematischen Darstellung ein erfindungsgemäßes System zur Wartung von seitens in Mobilfunknetzen betreibbaren mobilen Endgeräten gespeicherten nutzerindividuellen Daten, mit einer erfindungsgemäßen Wartungsvorrichtung und einem erfindungsgemäßen mobilen Endgerät.

Fig. 1 zeigt ein System zur Wartung von seitens in Mobilfunknetzen betreibbaren mobilen Endgeräten 1 gespeicherten nutzerindividuellen Daten, mit einem mobilen Endgerät 1 und einer Wartungsvorrichtung 11.

Das als Mobilfunktelefon 1 ausgebildete mobilen Endgerät 1 ist in einem hier nicht explizit dargestellten Mobilfunknetz in an und für sich bekannter Art und Weise betreibbar und weist ein als Anzeigeeinrichtung 2 zur optischen Wiedergabe von Informationen dienendes Display 2, eine als Eingabeeinrichtung 3 zur Erfassung von Informationen dienende, mehrere Tasten aufweisende Tastatur 3 und eine in Fig. 1 symbolisch dargestellte Speichereinrichtung 4 zur Speicherung nutzerindividueller Daten auf. Weiter weist das mobile Endgerät 1 eine in Fig. 1 ebenfalls symbolisch dargestellte Steuereinrichtung 5, vorliegend einen Mikrocontroller, auf. Die Steuereinrichtung 5 ist über einen Bus oder dergleichen Verbindung 7, 8 und 9 mit der Anzeigeeinrichtung 2, der Eingabeeinrichtung 3 und der Speichereinrichtung 4 des mobilen Endgerätes 1 diese steuernd verbunden. Ferner weist das mobile Endgerät 1 eine mit der Steuereinrichtung 5 über einen Bus oder dergleichen Verbindung 10 verbundene, vorliegend als Funkschnittstelle gemäß dem Bluetooth-Standard ausgebildete Schnittstelle 6 auf, welche mit bzw. von der Steuereinrichtung 5 des mobilen Endgerätes 1 steuerbar ist. Über die Schnittstelle 6 kann das mobile Endgerät 1 mit anderen eine einem entsprechenden Standard genügende Schnittstelle nutzenden Einrichtungen, beispielsweise einem anderen mobilen Endgerät oder der Wartungsvorrichtung 11 in eine Datenaustauschverbindung 19, 20, 21 treten.

Die Wartungsvorrichtung 11 weist vorliegend ein als Anzeigeeinrichtung 12 zur optischen Wiedergabe von Informationen dienendes Display 12, eine als Eingabeeinrichtung 13 zur Erfassung von Informationen dienende, mehrere Tasten aufweisende Tastatur 13, eine in Fig. 1 symbolisch dargestellte Speichereinrichtung 14 zur Speicherung nutzerindividueller Daten und eine eine Verbindung 19, 20, 21 zum Datenaustausch mit wenigstens einem mobilen Endgerät 1 bereitstellende Schnittstelle 15 auf. Die für eine Datenaustauschverbindung 19, 20, 21 mit einem mobilen Endgerät 1 ausgebildete Schnittstelle 15 der Wartungsvorrichtung 11 ist vorliegend ebenfalls als Funkschnittstelle gemäß dem Bluetooth-Standard ausgebildet und über einen Bus oder dergleichen Verbindungen 16, 17 und 18 mit der Anzeigeeinrichtung 12, der Eingabeeinrichtung 13 und der Speichereinrichtung 14 der Wartungsvorrichtung 11 verbunden.

Die Anzeigeeinrichtung 12, die Eingabeeinrichtung 13 und die Speichereinrichtung 14 und die Schnittstelle 15 der Wartungsvorrichtung 11 sind dabei derart ausgebildet, dass diese von der Steuereinrichtung 5 des mobilen Endgerätes 1 über die Datenaustauschverbindung 19, 20 und 21 steuerbar sind.

Im Rahmen der Steuerung werden dabei seitens der Anzeigeeinrichtung 12 der Wartungsvorrichtung 11 wiederzugebende Informationen der Anzeigeeinrichtung 12 der Wartungsvorrichtung 11 von der Steuereinrichtung 5 des mobilen Endgerätes 1 über die in Fig. 1 mit 19 gekennzeichnete Datenaustauschverbindung 19 zwischen dem mobilen Endgerät 1 und der Wartungsvorrichtung 11 zugeführt und entsprechend seitens der Anzeigeeinrichtung 12 der Wartungsvorrichtung 11 wiedergegeben. Dabei korrespondiert die Wiedergabe seitens der Anzeigeeinrichtung 12 der Wartungsvorrichtung 11 vorliegend der Wiedergabe seitens der Anzeigeeinrichtung 2 des mobilen Endgerätes1.

Im Rahmen der Steuerung seitens der Eingabeeinrichtung 13 der Wartungsvorrichtung 11 zur Erfassung und/oder Verarbeitung von Daten durch Tastenbetätigung erfolgende Eingaben werden über die in Fig. 1 mit 21 gekennzeichnete Datenaustauschverbindung 21 zwischen der Wartungsvorrichtung 11 und dem mobilen Endgerät 1 der Steuereinrichtung 5 des mobilen Endgerätes 1 zugeführt und seitens der Steuereinrichtung 5 des mobilen Endgerätes 1 entsprechend erfasst bzw. verarbeitet. Dabei korrespondieren die Eingabemöglichkeiten seitens der Wartungsvorrichtung 11 zur Bedienung und/oder Handhabung der Wartung den entsprechenden Eingabemöglichkeiten zur Bedienung und/oder Handhabung der Wartung des mobilen Endgerätes 1. Vorteilhafterweise wird die von der Wartungsvorrichtung 11 für die Bedienung und/oder Handhabung genutzte Sprache von dem mobilen Endgerät 1 vorgegeben bzw. entspricht diese der des mobilen Endgerätes 1.

Ferner sind im Rahmen der Steuerung über die in Fig. 1 mit 20 gekennzeichnete Datenaustauschverbindung 20 nutzerindividuelle Daten, beispielsweise Namen, Rufnummern und dergleichen Daten von Kommunikationspartnern und/oder Terminen des Nutzers des mobilen Endgerätes 1, zwischen der Speichereinrichtung 4 des mobilen Endgerätes 1 und der Speichereinrichtung 14 der Wartungsvorrichtung 11 zur wartenden Sicherung, Pflege und/oder Aktualisierung von Datenbeständen austauschbar.

Die in der Figur der Zeichnung dargestellten Ausführungsbeispiele der Erfindung dienen lediglich der Erläuterung der Erfindung und sind für diese nicht beschränkend.

### Bezugszeichenliste

- 1: mobiles Endgerät/Mobilfunktelefon
- 2: Anzeigeeinrichtung/Display (mobiles Endgerät (1))
- 3: Eingabeeinrichtung/Tastatur (mobiles Endgerät (1))
- 4: Speichereinrichtung (mobiles Endgerät (1))
- 5: Steuereinrichtung (mobiles Endgerät (1))
- 6: Schnittstelle (mobiles Endgerät (1))
- 7: Verbindung/Steuerdaten (Anzeigeeinrichtung (2))
- 8: Verbindung/Steuerdaten (Eingabeeinrichtung (3))
- 9: Verbindung/Steuerdaten (Speichereinrichtung (4))
- 10: Verbindung/Datenaustausch (Schnittstelle (6))
- 11: Wartungsvorrichtung
- 12: Anzeigeeinrichtung/Display (Wartungsvorrichtung (11))
- 13: Eingabeeinrichtung/Tastatur (Wartungsvorrichtung (11))
- 14: Speichereinrichtung (Wartungsvorrichtung (11))
- 15: Schnittstelle (Wartungsvorrichtung (11))
- 16: Verbindung/Steuerdaten (Anzeigeeinrichtung (12))
- 17: Verbindung/Steuerdaten (Eingabeeinrichtung (13))
- 18: Verbindung/Steuerdaten (Speichereinrichtung (14))
- 19: Datenaustauschverbindung (Anzeigeeinrichtung (12))
- 20: Datenaustauschverbindung (Speichereinrichtung (14))
- 21: Datenaustauschverbindung (Eingabeeinrichtung (13))

## Patentansprüche

1. System zur Wartung von seitens in Mobilfunknetzen betreibbaren mobilen Endgeräten (1) gespeicherten nutzerindividuellen Daten, mit wenigstens einem mobilen Endgerät (1), welches in einem Mobilfunknetz betreibbar ist, eine Anzeigeeinrichtung (2) zur optischen Wiedergabe von Informationen, wenigstens eine Eingabeeinrichtung (3) zur Erfassung von Informationen, wenigstens eine Speichereinrichtung (4) zur Speicherung nutzerindividueller Daten und eine zumindest die Anzeigeeinrichtung (2), die Eingabeeinrichtung (3) und die Speichereinrichtung (4) steuernde Steuereinrichtung (5) aufweist, und einer Wartungsvorrichtung (11), welche wenigstens eine eine Verbindung (19, 20, 21) zum Datenaustausch mit wenigstens einem mobilen Endgerät (1) bereitstellende Schnittstelle (15), wenigstens eine mit der Schnittstelle (15) verbundene Speichereinrichtung (14) zur Speicherung von Daten, und eine mit der Schnittstelle (15) verbundene, wenigstens zwei Tasten aufweisende Eingabeeinrichtung (13) zur Erfassung und/oder Verarbeitung von Daten aufweist, wobei die Steuerung der Wartungsvorrichtung (11) mit der Steuereinrichtung (5) des mobilen Endgerätes (1) erfolgt, die Wartungsvorrichtung (11) eine mit der Schnittstelle (15) verbundene Anzeigeeinrichtung (12) zur optischen Wiedergabe von nutzerindividuellen Daten wenigstens eines mobilen Endgerätes (1) und/oder Eingabemöglichkeiten zur Eingabe und/oder Verarbeitung von nutzerindividuellen Daten wenigstens eines mobilen Endgerätes (1) aufweist und die optische Wiedergabe von Eingabemöglichkeiten zur Eingabe und/oder Verarbeitung von nutzerindividuellen Daten seitens der Anzeigeeinrichtung (12) korrespondierend mit der jeweiligen eine entsprechende Eingabe und/oder Verarbeitung von nutzerindividuellen Daten durch Betätigung ermöglichenden Taste der Eingabeeinrichtung (3) erfolgt, **dadurch gekennzeichnet,**
**dass**
die optische Wiedergabe von Eingabemöglichkeiten zur Eingabe und/oder Verarbeitung von nutzerindividuellen Daten seitens der Anzeigeeinrichtung (12) mit der jeweiligen eine entsprechende Eingabe und/oder Verarbeitung von nutzerindividuellen Daten durch Betätigung ermöglichenden Taste der Eingabeeinrichtung (3) hinsichtlich der Farbe, der Form und/oder der Position der Taste seitens der Eingabeeinrichtung (3) korrespondiert.

2. System nach Anspruch 1, **dadurch gekennzeichnet, dass** im Rahmen der Steuerung der Wartungsvorrichtung (11) seitens der Eingabeeinrichtung (13) der Wartungsvorrichtung (11) zur Erfassung und/oder Verarbeitung von Daten durch Tastenbetätigung erfolgende Eingaben über die eine Datenaustauschverbindung (21) zwischen der Wartungsvorrichtung (11) und einem mobilen Endgerät (1) bereitstellende Schnittstelle (15) der Wartungsvorrichtung (11) der Steuereinrichtung (5) des mobilen Endgerätes (1) zuführbar und seitens der Steuereinrichtung (5) des mobilen Endgerätes (1) entsprechend erfassbar und/oder verarbeitbar sind.

3. System nach Anspruch 2, **dadurch gekennzeichnet, dass** seitens der Steuereinrichtung (5) des mobilen Endgerätes (1) erfasste und/oder verarbeitete Daten seitens der Anzeigeeinrichtung (2) des mobilen Endgerätes (1) wiedergebbar sind.

4. System nach einem der Ansprüche 1 bis 3, **dadurch gekennzeichnet, dass** im Rahmen der Steuerung der Wartungsvorrichtung (11) seitens der Anzeigeeinrichtung (12) der Wartungsvorrichtung (11) wiederzugebende Informationen der Anzeigeeinrichtung (12) der Wartungsvorrichtung (11) von der Steuereinrichtung (5) des mobilen Endgerätes (1) über die eine Datenaustauschverbindung (19) zwischen der Wartungsvorrichtung (11) und einem mobilen Endgerät (1) bereitstellende Schnittstelle (15) der Wartungsvorrichtung (11) zuführbar und entsprechend seitens der Anzeigeeinrichtung (12) der Wartungsvorrichtung (11) wiedergebbar sind.

5. System nach einem der Ansprüche 1 bis 4, **gekennzeichnet durch** eine Synchronisierung von nutzerindividuellen Daten zwischen einem mobilen Endgerät (1) und der Speichereinrichtung (14, 4) der Wartungsvorrichtung (11) und/oder des mobilen Endgerätes (1) als Verarbeitung von nutzerindividuellen Daten.

6. System nach Anspruch 5, **gekennzeichnet durch** eine automatische Synchronisierung mit oder **durch** Aufbau einer Datenaustauschverbindung (19, 20, 21) zwischen einem mobilen Endgerät (1) und der Wartungsvorrichtung (11).

7. System nach einem der Ansprüche 1 bis 6, **gekennzeichnet durch** eine Konvertierung von nutzerindividuellen Daten von einem seitens des mobilen Endgerätes (1) genutzten Datenformat in ein seitens der Wartungsvorrichtung (11) genutztes Datenformat und/oder von einem seitens der Wartungsvorrichtung (11) genutzten Datenformat in ein seitens des mobilen Endgerätes (1) genutztes Datenformat als Verarbeitung von nutzerindividuellen Daten.

8. System nach einem der Ansprüche 1 bis 7, **dadurch gekennzeichnet, dass** nutzerindividuelle Daten seitens der Speichereinrichtung (4, 14) in komprimierter und/oder kodierter Form speicherbar sind, wobei die Komprimierung und/oder Kodierung vorzugsweise seitens der Steuereinrichtung (5) des mobilen Endgerätes (1) erfolgt oder zumindest von dieser steuerbar ist.

9. Vorrichtung (11) zur Wartung von seitens in Mobilfunknetzen betreibbaren mobilen Endgeräten (1) gespeicherten nutzerindividuellen Daten, mit wenigstens einer eine Verbindung (19, 20, 21) zum Datenaustausch mit wenigstens einem mobilen Endgerät (1) bereitstellenden Schnittstelle (15), wenigstens einer mit der Schnittstelle (15) verbundenen Speichereinrichtung (14) zur Speicherung von Daten, und einer mit der Schnittstelle (15) verbundenen, wenigstens zwei Tasten aufweisenden Eingabeeinrichtung (13) zur Erfassung und/oder Verarbeitung von Daten, wobei die Schnittstelle (15), die Speichereinrichtung (14) und/oder die Eingabeeinrichtung (13) mit der Steuereinrichtung (5) eines mobilen Endgerätes (1), welches in einem Mobilfunknetz betreibbar ist, eine Anzeigeeinrichtung (2) zur optischen Wiedergabe von Informationen, wenigstens eine Eingabeeinrichtung (3) zur Erfassung von Informationen, wenigstens eine Speichereinrichtung (4) zur Speicherung nutzerindividueller Daten und eine zumindest die Anzeigeeinrichtung (2), die Eingabeeinrichtung (3) und die Speichereinrichtung (4) steuernde Steuereinrichtung (5) aufweist, steuerbar ist, die Vorrichtung (11) eine mit der Schnittstelle (15) verbundene Anzeigeeinrichtung (12) zur optischen Wiedergabe von nutzerindividuellen Daten wenigstens eines mobilen Endgerätes (1) und/oder Eingabemöglichkeiten zur Eingabe und/oder Verarbeitung von nutzerindividuellen Daten wenigstens eines mobilen Endgerätes (1) aufweist, welche mit der Steuereinrichtung (5) des mobilen Endgerätes (1) steuerbar ist und die optische Wiedergabe von Eingabemöglichkeiten zur Eingabe und/oder Verarbeitung von nutzerindividuellen Daten seitens der Anzeigeeinrichtung (12) korrespondierend mit der jeweiligen eine entsprechende Eingabe und/oder Verarbeitung von nutzerindividuellen Daten durch Betätigung ermöglichenden Taste der Eingabeeinrichtung (3) erfolgt,
**dadurch gekennzeichnet,**
**dass**
die optische Wiedergabe von Eingabemöglichkeiten zur Eingabe und/oder Verarbeitung von nutzerindividuellen Daten seitens der Anzeigeeinrichtung (12) mit der jeweiligen eine entsprechende Eingabe und/oder Verarbeitung von nutzerindividuellen Daten durch Betätigung ermöglichenden Taste der Eingabeeinrichtung (3) hinsichtlich der Farbe, der Form und/oder der Position der Taste seitens der Eingabeeinrichtung (3) korrespondiert.

10. Vorrichtung (11) nach Anspruch 9, **dadurch gekennzeichnet, dass** im Rahmen der Steuerung seitens der Eingabeeinrichtung (13) durch Tastenbetätigung erfolgende Eingaben über die eine Datenaustauschverbindung (19) bereitstellende Schnittstelle (15) der Steuereinrichtung (5) des mobilen Endgerätes (1) zuführbar sind.

11. Vorrichtung (11) nach Anspruch 9 oder Anspruch 10, **dadurch gekennzeichnet, dass** im Rahmen der Steuerung seitens der Anzeigeeinrichtung (2, 12) wiederzugebende Informationen der Anzeigeeinrichtung (12) von der Steuereinrichtung (5) des mobilen Endgerätes (1) über die eine Datenaustauschverbindung (21) bereitstellenden Schnittstelle (15) zuführbar und entsprechend seitens der Anzeigeeinrichtung (12) wiedergebbar sind.

12. Vorrichtung (11) nach einem der Ansprüche 9 bis 11, **gekennzeichnet durch** eine Synchronisierung von nutzerindividuellen Daten zwischen einem mobilen Endgerät (1) und der Speichereinrichtung (4, 14) als Verarbeitung von nutzerindividuellen Daten.

13. Vorrichtung (11) nach Anspruch 12, **gekennzeichnet durch** eine automatische Synchronisierung mit oder **durch** Aufbau einer Datenaustauschverbindung (19, 20, 21) zu einem mobilen Endgerät (1).

14. Vorrichtung (11) nach einem der Ansprüche 9 bis 13, **gekennzeichnet durch** eine Konvertierung von nutzerindividuellen Daten von einem seitens eines mobilen Endgerätes (1) genutzten Datenformat in ein seitens der Vorrichtung (11) genutztes Datenformat und/oder von einem seitens der Vorrichtung (11) genutzten Datenformat in ein seitens des mobilen Endgerätes (1) genutztes Datenformat als Verarbeitung von nutzerindividuellen Daten.

15. Vorrichtung (11) nach einem der Ansprüche 9 bis 14, **dadurch gekennzeichnet, dass** nutzerindividuelle Daten seitens der Speichereinrichtung (4, 14) in komprimierter und/oder kodierter Form speicherbar sind, wobei die Komprimierung und/oder Kodierung vorzugsweise seitens der Steuereinrichtung (5) des mobilen Endgerätes (1) erfolgt oder zumindest von dieser steuerbar ist.

16. Vorrichtung (11) nach einem der Ansprüche 9 bis 15, **dadurch gekennzeichnet, dass** diese eine Wartungsvorrichtung (11) eines Systems nach einem der Ansprüche 1 bis 8 ist.

17. Mobiles Endgerät (1) zur Nutzung in Mobilfunknetzen, zur Wartung von seitens in Mobilfunknetzen betreibbaren mobilen Endgeräten (1) gespeicherten nutzerindividuellen Daten, mit einer Anzeigeeinrichtung (2) zur optischen Wiedergabe von Informationen, wenigstens einer Eingabeeinrichtung (3) zur Erfassung von Informationen, wenigstens einer Speichereinrichtung (4) zur Speicherung nutzerindividueller Daten und einer zumindest die Anzeigeeinrichtung (2), die Eingabeeinrichtung (3) und die Speichereinrichtung (4) steuernden Steuereinrichtung (5), wobei mit der
Steuereinrichtung (5) eine Wartungsvorrichtung (11), welche wenigstens eine eine Verbindung (19, 20, 21) zum Datenaustausch mit wenigstens einem mobilen Endgerät (1) bereitstellende Schnittstelle (15), wenigstens eine mit der Schnittstelle (15) verbundene Speichereinrichtung (14) zur Speicherung von Daten, und einer mit der Schnittstelle (15) verbundene, wenigstens zwei Tasten aufweisende Eingabeeinrichtung (13) zur Erfassung und/oder Verarbeitung von Daten aufweist, steuerbar ist, mit der Steuereinrichtung (5) eine Anzeigeeinrichtung (12) zur optischen Wiedergabe von Informationen der Wartungsvorrichtung (11) steuerbar ist, wobei die Anzeigevorrichtung (12) der Wartungsvorrichtung (11) mit der Schnittstelle (15) verbunden ist und die Anzeigevorrichtung (12) zur optischen Wiedergabe von nutzerindividuellen Daten wenigstens eines mobilen Endgerätes (1) und/oder Eingabemöglichkeiten zur Eingabe und/oder Verarbeitung von nutzerindividuellen Daten wenigstens eines mobilen Endgerätes (1) ausgebildet ist und die optische Wiedergabe von Eingabemöglichkeiten zur Eingabe und/oder Verarbeitung von nutzerindividuellen Daten seitens der Anzeigeeinrichtung (12) korrespondierend mit der jeweiligen eine entsprechende Eingabe und/oder Verarbeitung von nutzerindividuellen Daten durch Betätigung ermöglichenden Taste der Eingabeeinrichtung (3) erfolgt, **dadurch gekennzeichnet,**
**dass**
die optische Wiedergabe von Eingabemöglichkeiten zur Eingabe und/oder Verarbeitung von nutzerindividuellen Daten seitens der Anzeigeeinrichtung (12) mit der jeweiligen eine entsprechende Eingabe und/oder Verarbeitung von nutzerindividuellen Daten durch Betätigung ermöglichenden Taste der Eingabeeinrichtung (3) hinsichtlich der Farbe, der Form und/oder der Position der Taste seitens der Eingabeeinrichtung (3) korrespondiert.

18. Mobiles Endgerät (1) nach Anspruch 17, **dadurch gekennzeichnet, dass** im Rahmen der Steuerung seitens der Eingabeeinrichtung (13) der Wartungsvorrichtung (11) durch Tastenbetätigung erfolgende Eingaben über die eine Datenaustauschverbindung (19, 20, 21) bereitstellende Schnittstelle (15) der Wartungsvorrichtung (11) der Steuereinrichtung (5) zuführbar und seitens der Steuereinrichtung (5) entsprechend erfassbar und/oder verarbeitbar sind.

19. Mobiles Endgerät (1) nach Anspruch 18, **dadurch gekennzeichnet, dass** von der Steuereinrichtung (5) erfasste und/oder verarbeitete Daten seitens der Anzeigeeinrichtung (2, 12) wiedergebbar sind.

20. Mobiles Endgerät (1) nach einem der Ansprüche 17 bis 19, **dadurch gekennzeichnet, dass** im Rahmen der Steuerung seitens der Anzeigeeinrichtung (12) der Wartungsvorrichtung (11) wiederzugebende Informationen der Anzeigeeinrichtung (12) der Wartungsvorrichtung (11) von der Steuereinrichtung (5) über die eine Datenaustauschverbindung (19, 20, 21) bereitstellende Schnittstelle (15) der Wartungsvorrichtung (11) zuführbar und entsprechend seitens der Anzeigeeinrichtung (12) der Wartungsvorrichtung (11) wiedergebbar sind.

21. Mobiles Endgerät (1) nach einem der Ansprüche 17 bis 20, **gekennzeichnet durch** eine Synchronisierung von nutzerindividuellen Daten zwischen dem mobilen Endgerät (1) und der Speichereinrichtung (4, 14) als Verarbeitung von nutzerindividuellen Daten.

22. Mobiles Endgerät (1) nach Anspruch 21, **gekennzeichnet durch** eine automatische Synchronisierung mit oder **durch** Aufbau einer Datenaustauschverbindung (19, 20, 21) zu der Wartungsvorrichtung (11).

23. Mobiles Endgerät (1) nach einem der Ansprüche 17 bis 22, **gekennzeichnet durch** eine Konvertierung von nutzerindividuellen Daten von einem seitens des mobilen Endgerätes (1) genutzten Datenformat in ein seitens der Wartungsvorrichtung (11) genutztes Datenformat und/oder von einem seitens der Wartungsvorrichtung (11) genutzten Datenformat in ein seitens des mobilen Endgerätes (1) genutztes Datenformat als Verarbeitung von nutzerindividuellen Daten.

24. Mobiles Endgerät (1) nach einem der Ansprüche 17 bis 23, **dadurch gekennzeichnet, dass** nutzerindividuelle Daten seitens der Speichereinrichtung (4, 14) in komprimierter und/oder kodierter Form speicherbar sind, wobei die Komprimierung und/oder Kodierung vorzugsweise seitens der Steuereinrichtung (5) erfolgt oder zumindest von dieser steuerbar ist.

25. Mobiles Endgerät (1) nach einem der Ansprüche 17 bis 24, **dadurch gekennzeichnet, dass** dieses ein mobiles Endgerät (1) eines Systems nach einem der Ansprüche 1 bis 8 ist.

26. Verfahren zur Wartung von seitens in Mobilfunknetzen betreibbaren mobilen Endgeräten (1) gespeicherten nutzerindividuellen Daten, **dadurch gekennzeichnet, dass** ein System nach einem der Ansprüche 1 bis 8, eine Vorrichtung (11) nach einem der Ansprüche 9 bis 16 und/oder ein mobiles Endgerät (1) nach einem der Ansprüche 17 bis 25 verwendet werden.

## Claims

1. A system for maintaining user individual data stored by mobile terminals (1) that can be operated in mobile networks, comprising at least one mobile terminal (1) which can be operated in a mobile network, a display device (2) for the optical reproduction of information, at least one input device (3) for gathering information, at least one storage device (4) for storing user individual data and one control device (5) that controls at least the display device (2), the input device (3) and the storage device (4), and a maintenance device (11) which comprises at least one interface (15) that provides a connection (19, 20, 21) for the data exchange with at least one mobile terminal (1), at least one storage device (14) connected to the interface (15) for storing data and an input device (13) that is connected to the interface (15) and comprises at least two keys for gathering and/or processing data, wherein the control of the maintenance device (11) is realized by the control device (5) of the mobile terminal (1), the maintenance device (11) comprises a display device (12) connected to the interface (15) for the optical reproduction of user individual data of at least one mobile terminal (1) and/or input options for the input and/or processing of user individual data of at least one mobile terminal (1), and the optical reproduction of input options for the input and/or processing of user individual data by means of the display device (12) is realized in correspondence with the respective key of the input device (3) that enables a corresponding input and/or processing of user individual data by actuation,
**characterized in**
**that**
the optical reproduction of input options for the input and/or processing of user individual data by means of the display device (12) corresponds to the respective key of the input device (3), that enables a corresponding input and/or processing of user individual data by actuation, with respect to the colour, the shape and/or the position of the key of the input device (3).

2. A system according to claim 1, **characterized in that** within the scope of the control of the maintenance device (11), inputs that are made by actuating the keys of the input device (13) of the maintenance device (11) for gathering and/or processing data can be supplied to the control device (5) of the mobile terminal (1) by means of the interface (15) of the maintenance device (11) that provides a data exchange connection (21) between the maintenance device (11) and a mobile terminal (1) and can be correspondingly gathered and/or processed by the control device (5) of the mobile terminal (1).

3. A system according to claim 2, **characterized in that** data that have been gathered and/or processed by means of the control device (5) of the mobile terminal (1) can be reproduced by means of the display device (2) of the mobile terminal (1).

4. A system according to one of the claims 1 through 3, **characterized in that** within the scope of the control of the maintenance device (11), information to be reproduced by means of the display device (12) of the maintenance device (11) can be supplied to the display device (12) of the maintenance device (11) by means of the control device (5) of the mobile terminal (1) via the interface (15) of the maintenance device (11) that provides a data exchange connection (19) between the maintenance device (11) and a mobile terminal (1) and can be correspondingly reproduced by means of the display device (12) of the maintenance device (11).

5. A system according to one of the claims 1 through 4, **characterized by** a synchronization of user individual data between a mobile terminal (1) and the storage device (14, 4) of the maintenance device (11) and/or the mobile terminal (1) as processing of user individual data.

6. A system according to claim 5, **characterized by** an automatic synchronization with or by establishing a data exchange connection (19, 20, 21) between a mobile terminal (1) and the maintenance device (11).

7. A system according to one of the claims 1 through 6, **characterized by** a conversion of user individual data from a data format used by the mobile terminal (1) into a data format used by the maintenance device (11) and/or from a data format used by the maintenance device (11) into a data format used by the mobile terminal (1) as processing of user individual data.

8. A system according to one of the claims 1 through 7, **characterized in that** user individual data can be stored in compressed and/or encoded form by means of the storage device (4, 14), wherein the compression and/or encoding is preferably carried out by the control device (5) of the mobile terminal (1) or can at least be controlled by this one.

9. A device (11) for maintaining user individual data stored by mobile terminals (1) that can be operated in mobile networks, comprising at least one interface (15) that provides a connection (19, 20, 21) for the data exchange with at least one mobile terminal (1), at least one storage device (14) for storing data that is connected to the interface (15), and an input device (13) for gathering and/or processing data that is connected to the interface (15) and comprises at least two keys, wherein the interface (15), the storage device (14) and/or the input device (13) can be controlled by the control device (5) of a mobile terminal (1) which can be operated in a mobile network and which comprises a display device (2) for the optical reproduction of information, at least one input device (3) for gathering information, at least one storage device (4) for storing user individual data and a control device (5) that at least controls the display device (2), the input device (3) and the storage device (4), wherein the device (11) comprises a display device (12) connected to the interface (15) for the optical reproduction of user individual data of at least one mobile terminal (1) and/or input options for the input and/or processing of user individual data of at least one mobile terminal (1), which display device (12) can be controlled by the control device (5) of the mobile terminal (1), and wherein the optical reproduction of input options for the input and/or processing of user individual data by means of the display device (12) is realized in correspondence with the respective key of the input device (3) that enables a corresponding input and/or processing of user individual data by actuation,
**characterized in**
**that**
the optical reproduction of input options for the input and/or processing of user individual data by means of the display device (12) corresponds to the respective key of the input device (3), that enables a corresponding input and/or processing of user individual data by actuation, with respect to the colour, the shape and/or the position of the key of the input device (3).

10. A device (11) according to claim 9, **characterized in that** within the scope of the control, inputs that are made by actuating the keys of the input device (13) can be supplied to the control device (5) of the mobile terminal (1) by means of the interface (15) that provides a data exchange connection (19).

11. A device (11) according to claim 9 or claim 10, **characterized in that** within the scope of the control, information to be reproduced by means of the display device (2, 12) can be supplied to the display device (12) by means of the control device (5) of the mobile terminal (1) via the interface (15) that provides a data exchange connection (21) and can be correspondingly reproduced by means of the display device (12).

12. A device (11) according to one of the claims 9 through 11, **characterized by** a synchronization of user individual data between a mobile terminal (1) and the storage device (4, 14) as processing of user individual data.

13. A device (11) according to claim 12, **characterized by** an automatic synchronization with or by establishing a data exchange connection (19, 20, 21) to a mobile terminal (1).

14. A device (11) according to one of the claims 9 through 13, **characterized by** a conversion of user individual data from a data format used by a mobile terminal (1) into a data format used by the device (11) and/or from a data format used by the device (11) into a data format used by the mobile terminal (1) as processing of user individual data.

15. A device (11) according to one of the claims 9 through 14, **characterized in that** user individual data can be stored in compressed and/or encoded form by means of the storage device (4, 14), wherein the compression and/or encoding is preferably carried out by the control device (5) of the mobile terminal (1) or can at least be controlled by this one.

16. A device (11) according to one of the claims 9 through 15, **characterized in that** this one is a maintenance device (11) of a system according to one of the claims 1 through 8.

17. A mobile terminal (1) for the use in mobile networks for maintaining user individual data stored by mobile terminals (1) that can be operated in mobile networks, comprising a display device (2) for the optical reproduction of information, at least one input device (3) for gathering information, at least one storage device (4) for storing user individual data and a control device (5) that controls at least the display device (2), the input device (3) and the storage device (4), wherein a maintenance device (11), which comprises at least one interface (15) that provides a connection (19, 20, 21) for the data exchange with at least one mobile terminal (1), at least one storage device (14) connected to the interface (15) for storing data and an input device (13) that is connected to the interface (15) and comprises at least two keys for gathering and/or processing data, can be controlled by the control device (5), wherein a display device (12) for the optical reproduction of user individual data of the maintenance device (11) can be controlled by the control device (5), wherein the display device (12) of the maintenance device (11) is connected to the interface (15) and the display device (12) is designed for the optical reproduction of user individual data of at least one mobile terminal (1) and/or input options for the input and/or processing of user individual data of at least one mobile terminal (1), and the optical reproduction of input options for the input and/or processing of user individual data by means of the display device (12) is realized in correspondence with the respective key of the input device (3) that enables a corresponding input and/or processing of user individual data by actuation,
**characterized in**
**that**
the optical reproduction of input options for the input and/or processing of user individual data by means of the display device (12) corresponds to the respective key of the input device (3), that enables a corresponding input and/or processing of user individual data by actuation, with respect to the colour, the shape and/or the position of the key of the input device (3).

18. A mobile terminal (1) according to claim 17, **characterized in that** within the scope of the control, inputs that are made by actuating the keys of the input device (13) of the maintenance device (11) can be supplied to the control device (5) by means of the interface (15) of the maintenance device (11) that provides a data exchange connection (19, 20, 21) and can be correspondingly gathered and/or processed by the control device (5).

19. A mobile terminal (1) according to claim 18, **characterized in that** data that have been gathered and/or processed by means of the control device (5) can be reproduced by means of the display device (2,12).

20. A mobile terminal (1) according to one of the claims 17 through 19, **characterized in that** within the scope of the control, information to be reproduced by means of the display device (12) of the maintenance device (11) can be supplied to the display device (12) of the maintenance device (11) by means of the control device (5) via the interface (15) of the maintenance device (11) that provides a data exchange connection (19, 20, 21) and can be correspondingly reproduced by means of the display device (12) of the maintenance device (11).

21. A mobile terminal (1) according to one of the claims 17 through 20, **characterized by** a synchronization of user individual data between the mobile terminal (1) and the storage device (4, 14) as processing of user individual data.

22. A mobile terminal (1) according to claim 21, **characterized by** an automatic synchronization with or by establishing a data exchange connection (19, 20, 21) to the maintenance device (11).

23. A mobile terminal (1) according to one of the claims 17 through 22, **characterized by** a conversion of user individual data from a data format used by the mobile terminal (1) into a data format used by the maintenance device (11) and/or from a data format used by the maintenance device (11) into a data format used by the mobile terminal (1) as processing of user individual data.

24. A mobile terminal (1) according to one of the claims 17 through 23, **characterized in that** user individual data can be stored in compressed and/or encoded form by means of the storage device (4, 14), wherein the compression and/or encoding is preferably carried out by the control device (5) or can at least be controlled by this one.

25. A mobile terminal (1) according to one of the claims 17 through 24, **characterized in that** this one is a mobile terminal (1) of a system according to one of the claims 1 through 8.

26. A method for maintaining user individual data that have been stored by mobile terminals (1) that can be operated in mobile networks, **characterized in that** a system according to one of the claims 1 through 8, a device (11) according to one of the claims 9 through 16 and/or a mobile terminal (1) according to one of the claims 17 through 25 are used.

## Revendications

1. Système de maintenance de données spécifiques à l'utilisateur mémorisées par des terminaux mobiles (1) pouvant fonctionner dans des réseaux radio mobiles, comprenant au moins un terminal mobile (1) pouvant fonctionner dans un réseau radio mobile, un dispositif d'affichage (2) destiné à la reproduction optique d'informations, au moins un dispositif d'entrée (3) pour saisir des informations, au moins un dispositif de mémorisation (4) pour mémoriser des données spécifiques à l'utilisateur et un dispositif de commande (5) qui contrôle au moins le dispositif d'affichage (2), le dispositif d'entrée (3) et le dispositif de mémorisation (4), et un dispositif de maintenance (11) qui comprend au moins une interface (15) fournissant une connexion (19, 20, 21) destinée à l'échange de données avec au moins un terminal mobile (1), au moins un dispositif de mémorisation (14) relié à l'interface (15) pour mémoriser des données et un dispositif d'entrée (13) relié à l'interface (15) et comprenant au moins deux touches pour saisir et/ou traiter des données, la commande du dispositif de maintenance (11) se faisant par le dispositif de commande (5) du terminal mobile (1), le dispositif de maintenance (11) comprenant un dispositif d'affichage (12) relié à l'interface (15) et destiné à la reproduction optique des données spécifiques à l'utilisateur d'au moins un terminal mobile (1) et/ou des entrées possibles pour entrer et/ou traiter des données spécifiques à l'utilisateur d'au moins un terminal mobile (1), et la reproduction optique des entrées possibles pour entrer et/ou traiter des données spécifiques à l'utilisateur par le dispositif d'affichage (12) se faisant de façon à correspondre à la touche respective du dispositif d'entrée (3) qui permet une entrée et/ou un traitement correspondants des données spécifiques à l'utilisateur en actionnant la touche,
**caractérisé en ce**
**que**
la reproduction optique des entrées possibles pour entrer et/ou traiter des données spécifiques à l'utilisateur par moyen du dispositif d'affichage (12) se fait de façon à correspondre à la touche respective du dispositif d'entrée (3), laquelle permet une entrée et/ou un traitement correspondants des données spécifiques à l'utilisateur en actionnant la touche, par rapport à la couleur, à la forme et/ou à la position de la touche du dispositif d'entrée (3).

2. Système selon la revendication 1, **caractérisé en ce que** dans le cadre de la commande du dispositif de maintenance (11), des entrées effectuées par l'actionnement des touches du dispositif d'entrée (13) du dispositif de maintenance (11) pour saisir et/ou traiter des données peuvent être amenées au dispositif de commande (5) du terminal mobile (1) par moyen de l'interface (15) du dispositif de maintenance (11), laquelle fournit une connexion d'échange de données (21) entre le dispositif de maintenance (11) et un terminal mobile (1), et peuvent être saisies et/ou traitées par le dispositif de commande (5) du terminal mobile (1) de façon correspondante.

3. Système selon la revendication 2, **caractérisé en ce que** des données saisies et/ou traitées par le dispositif de commande (5) du terminal mobile (1) peuvent être reproduites par le dispositif d'affichage (2) du terminal mobile (1).

4. Système selon l'une des revendications 1 à 3, **caractérisé en ce que** dans le cadre de la commande du dispositif de maintenance (11), des informations à reproduire par le dispositif d'affichage (12) du dispositif de maintenance (11) peuvent être amenées au dispositif d'affichage (12) du dispositif de maintenance (11) par moyen du dispositif de commande (5) du terminal mobile (1) via l'interface (15) du dispositif de maintenance (11), laquelle fournit une connexion d'échange de données (19) entre le dispositif de maintenance (11) et un terminal mobile (1), et peuvent être reproduites par le dispositif d'affichage (12) du dispositif de maintenance (11) de façon correspondante.

5. Système selon l'une des revendications 1 à 4, **caractérisé par** une synchronisation de données spécifiques à l'utilisateur entre un terminal mobile (1) et le dispositif de mémorisation (14, 4) du dispositif de maintenance (11) et/ou du terminal mobile (1) en tant que traitement de données spécifiques à l'utilisateur.

6. Système selon la revendication 5, **caractérisé par** une synchronisation automatique avec ou par l'établissement d'une connexion d'échange de données (19, 20, 21) entre un terminal mobile (1) et le dispositif de maintenance (11).

7. Système selon l'une des revendications 1 à 6, **caractérisé par** une conversion de données spécifiques à l'utilisateur d'un format de données utilisé par le terminal mobile (1) à un format de données utilisé par le dispositif de maintenance (11) et/ou d'un format de données utilisé par le dispositif de maintenance (11) à un format de données utilisé par le terminal mobile (1) en tant que traitement de données spécifiques à l'utilisateur.

8. Système selon l'une des revendications 1 à 7, **caractérisé en ce que** des données spécifiques à l'utilisateur peuvent être mémorisées sous forme comprimée et/ou codée par moyen du dispositif de mémorisation (4, 14), la compression et/ou le codage étant exécuté de préférence par le dispositif de commande (5) du terminal mobile (1) ou pouvant au moins être commandé par celui-ci.

9. Dispositif (11) destiné à la maintenance de données spécifiques à l'utilisateur mémorisées par des terminaux mobiles (1) pouvant fonctionner dans des réseaux radio mobiles, comprenant au moins une interface (15) fournissant une connexion (19, 20, 21) destinée à l'échange de données avec au moins un terminal mobile (1), au moins un dispositif de mémorisation (14) relié à l'interface (15) pour mémoriser des données et un dispositif d'entrée (13) relié à l'interface (15) et comprenant au moins deux touches pour saisir et/ou traiter des données, l'interface (15), le dispositif de mémorisation (14) et/ou le dispositif d'entrée (13) pouvant être contrôlés par le dispositif de commande (5) d'un terminal mobile (1) pouvant fonctionner dans un réseau radio mobile et comprenant un dispositif d'affichage (2) destiné à la reproduction optique des informations, au moins un dispositif d'entrée (3) pour saisir des informations, au moins un dispositif de mémorisation (4) pour mémoriser des données spécifiques à l'utilisateur et un dispositif de commande (5) qui contrôle au moins le dispositif d'affichage (2), le dispositif d'entrée (3) et le dispositif de mémorisation (4), le dispositif (11) comprenant un dispositif d'affichage (12) relié à l'interface (15) et destiné à la reproduction optique de données spécifiques à l'utilisateur d'au moins un terminal mobile (1) et/ou d'entrées possibles pour entrer et/ou traiter des données spécifiques à l'utilisateur d'au moins un terminal mobile (1), lequel dispositif d'affichage (12) pouvant être contrôlé par le dispositif de commande (5) du terminal mobile (1), et la reproduction optique d'entrées possibles pour entrer et/ou traiter des données spécifiques à l'utilisateur par le dispositif d'affichage (12) se faisant de façon à correspondre à la touche respective du dispositif d'entrée (3) qui permet une entrée et/ou un traitement correspondants des données spécifiques à l'utilisateur en actionnant la touche,
**caractérisé en ce**
**que**
la reproduction optique des entrées possibles pour entrer et/ou traiter des données spécifiques à l'utilisateur par moyen du dispositif d'affichage (12) se fait de façon à correspondre à la touche respective du dispositif d'entrée (3), laquelle permet une entrée et/ou un traitement correspondants des données spécifiques à l'utilisateur en actionnant la touche, par rapport à la couleur, à la forme et/ou à la position de la touche du dispositif d'entrée (3).

10. Dispositif (11) selon la revendication 9, **caractérisé en ce que** dans le cadre de la commande, des entrées effectuées par l'actionnement des touches du dispositif d'entrée (13) peuvent être amenées au dispositif de commande (5) du terminal mobile (1) par moyen de l'interface (15) fournissant une connexion d'échange de données (19).

11. Dispositif (11) selon la revendication 9 ou la revendication 10, **caractérisé en ce que** dans le cadre de la commande, des informations à reproduire par le dispositif d'affichage (2, 12) peuvent être amenées au dispositif d'affichage (12) par moyen du dispositif de commande (5) du terminal mobile (1) via l'interface (15) fournissant une connexion d'échange de données (21) et peuvent être reproduites par le dispositif d'affichage (12) de façon correspondante.

12. Dispositif (11) selon l'une des revendications 9 à 11, **caractérisé par** une synchronisation de données spécifiques à l'utilisateur entre un terminal mobile (1) et le dispositif de mémorisation (14, 4) en tant que traitement de données spécifiques à l'utilisateur.

13. Dispositif (11) selon la revendication 12, **caractérisé par** une synchronisation automatique avec ou par l'établissement d'une connexion d'échange de données (19, 20, 21) à un terminal mobile (1).

14. Dispositif (11) selon l'une des revendications 9 à 13, **caractérisé par** une conversion de données spécifiques à l'utilisateur d'un format de données utilisé par un terminal mobile (1) à un format de données utilisé par le dispositif (11) et/ou d'un format de données utilisé par le dispositif (11) à un format de données utilisé par le terminal mobile (1) en tant que traitement de données spécifiques à l'utilisateur.

15. Dispositif (11) selon l'une des revendications 9 à 14, **caractérisé en ce que** des données spécifiques à l'utilisateur peuvent être mémorisées sous forme comprimée et/ou codée par moyen du dispositif de mémorisation (4, 14), la compression et/ou le codage étant exécuté de préférence par le dispositif de commande (5) du terminal mobile (1) ou pouvant au moins être commandé par celui-ci.

16. Dispositif (11) selon l'une des revendications 9 à 15, **caractérisé en ce que** celui-ci est un dispositif de maintenance (11) d'un sysfme selon l'une des revendications 1 à 8.

17. Terminal mobile (1) destiné à l'utilisation dans des réseaux radio mobiles, pour maintenir des données spécifiques à l'utilisateur mémorisées par des terminaux mobiles (1) pouvant fonctionner dans des réseaux radio mobiles, comprenant un dispositif d'affichage (2) destiné à la reproduction optique d'informations, au moins un dispositif d'entrée (3) pour saisir des informations, au moins un dispositif de mémorisation (4) pour mémoriser des données spécifiques à l'utilisateur et un dispositif de commande (5) qui contrôle au moins le dispositif d'affichage (2), le dispositif d'entrée (3) et le dispositif de mémorisation (4), un dispositif de maintenance (11) qui comprend au moins une interface (15) fournissant une connexion (19, 20, 21) destinée à l'échange de données avec au moins un terminal mobile (1), au moins un dispositif de mémorisation (14) relié à l'interface (15) pour mémoriser des données et un dispositif d'entrée (13) relié à l'interface (15) et comprenant au moins deux touches pour saisir et/ou traiter des données, pouvant être contrôlé par le dispositif de commande (5), un dispositif d'affichage (12) destiné à la reproduction optique des informations du dispositif de maintenance (11) pouvant être contrôlé par le dispositif de commande (5), le dispositif d'affichage (12) du dispositif de maintenance (11) étant relié à l'interface (15) et le dispositif d'affichage (12) étant configuré pour la reproduction optique des données spécifiques à l'utilisateur d'au moins un terminal mobile (1) et/ou des entrées possibles pour entrer et/ou traiter des données spécifiques à l'utilisateur d'au moins un terminal mobile (1), et la reproduction optique des entrées possibles pour entrer et/ou traiter des données spécifiques à l'utilisateur par le dispositif d'affichage (12) se faisant de façon à correspondre à la touche respective du dispositif d'entrée (3) qui permet une entrée et/ou un traitement correspondants des données spécifiques à l'utilisateur en actionnant la touche,
**caractérisé en ce**
**que**
la reproduction optique des entrées possibles pour entrer et/ou traiter des données spécifiques à l'utilisateur par moyen du dispositif d'affichage (12) se fait de façon à correspondre à la touche respective du dispositif d'entrée (3), laquelle permet une entrée et/ou un traitement correspondants des données spécifiques à l'utilisateur en actionnant la touche, par rapport à la couleur, à la forme et/ou à la position de la touche du dispositif d'entrée (3).

18. Terminal mobile (1) selon la revendication 17, **caractérisé en ce que** dans le cadre de la commande, des entrées effectuées par l'actionnement des touches du dispositif d'entrée (13) du dispositif de maintenance (11) peuvent être amenées au dispositif de commande (5) par moyen de l'interface (15) du dispositif de maintenance (11), laquelle fournit une connexion d'échange de données (19, 20, 21), et peuvent être saisies et/ou traitées par le dispositif de commande (5) de façon correspondante.

19. Terminal mobile (1) selon la revendication 18, **caractérisé en ce que** des données saisies et/ou traitées par le dispositif de commande (5) peuvent être reproduites par le dispositif d'affichage (2, 12).

20. Terminal mobile (1) selon l'une des revendications 17 à 19, **caractérisé en ce que** dans le cadre de la commande, des informations à reproduire par le dispositif d'affichage (12) du dispositif de maintenance (11) peuvent être amenées au dispositif d'affichage (12) du dispositif de maintenance (11) par moyen du dispositif de commande (5) via l'interface (15) du dispositif de maintenance (11), laquelle fournit une connexion d'échange de données (19, 20, 21) et peuvent être reproduites par le dispositif d'affichage (12) du dispositif de maintenance (11) de façon correspondante.

21. Terminal mobile (1) selon l'une des revendications 17 à 20, **caractérisé par** une synchronisation de données spécifiques à l'utilisateur entre le terminal mobile (1) et le dispositif de mémorisation (14, 4) en tant que traitement de données spécifiques à l'utilisateur.

22. Terminal mobile (1) selon la revendication 21, **caractérisé par** une synchronisation automatique avec ou par l'établissement d'une connexion d'échange de données (19, 20, 21) au dispositif de maintenance (11).

23. Terminal mobile (1) selon l'une des revendications 17 à 22, **caractérisé par** une conversion de données spécifiques à l'utilisateur d'un format de données utilisé par le terminal mobile (1) à un format de données utilisé par le dispositif de maintenance (11) et/ou d'un format de données utilisé par le dispositif de maintenance (11) à un format de données utilisé par le terminal mobile (1) en tant que traitement de données spécifiques à l'utilisateur.

24. Terminal mobile (1) selon l'une des revendications 17 à 23, **caractérisé en ce que** des données spécifiques à l'utilisateur peuvent être mémorisées sous forme comprimée et/ou codée par moyen du dispositif de mémorisation (4, 14), la compression et/ou le codage étant exécuté de préférence par le dispositif de commande (5) ou pouvant au moins être commandé par celui-ci.

25. Terminal mobile (1) selon l'une des revendications 17 à 24, **caractérisé en ce que** celui-ci est un terminal mobile (1) d'un système selon l'une des revendications 1 à 8.

26. Procédé de maintenance de données spécifiques à l'utilisateur mémorisées par des terminaux mobiles (1) pouvant fonctionner dans des réseaux radio mobiles, **caractérisé en ce qu'**un système selon l'une des revendications 1 à 8, un dispositif (11) selon l'une des revendications 9 à 16 et/ou un terminal mobile (1) selon l'une des revendications 17 à 25 sont utilisés.
